# FASCICULE DE BREVET EUROPEEN

(11) **EP 2 923 398 B1**
(45) Date de publication et mention de la délivrance du brevet: **06.03.2019**
(21) Numéro de dépôt: 13795484.8
(22) Date de dépôt: 25.11.2013
(51) Int. Cl.: H01M 4/04, H01M 4/134, H01M 4/1395, H01M 4/36, H01M 4/38, H01M 4/583

(54) **PROCEDE DE FABRICATION D'UNE ELECTRODE POUR ACCUMULATEUR AU LITHIUM**
VERFAHREN ZUR HERSTELLUNG EINER ELEKTRODE FÜR EINEN LITHIUMAKKUMULATOR
METHOD FOR PRODUCING AN ELECTRODE FOR A LITHIUM ACCUMULATOR

(30) Priorité: 26.11.2012 FR 1261250
(43) Date de publication de la demande: 30.09.2015
(73) Titulaire: Commissariat à l'Énergie Atomique et aux Énergies Alternatives, 75015 Paris (FR)
(72) Inventeur: LECONTE, Yann, F-78470 Saint-Remy Les Chevreuse (FR); HERLIN-BOIME, Nathalie, F-91400 Orsay (FR); QUINSAC, Axelle, F-78180 Montigny-le-Bretonneux (FR); PORCHER, Willy, F-38000 Grenoble (FR); BRESTAZ, Marc, F-60200 Compiegne (FR); JOUANNEAU SI LARBI, Séverine, F-38590 Sillans (FR)
(74) Mandataire: Gevers & Orès
(86) Numéro de dépôt international: PCT/EP2013/074561
(87) Numéro de publication internationale: WO 2014/080006

(56) Documents cités:
- FR-A1- 2 965 107
- US-A1- 2003 157 867
- US-A1- 2005 031 780
- US-A1- 2010 297 502

## Description

La présente invention concerne un procédé de fabrication d'une électrode comportant un matériau nanocomposite de type coeur-coquille en tant que matériau actif, matériau nanocomposite dont le coeur est en silicium et la coquille en carbone.

L'invention concerne également une électrode obtenue par ce procédé.

Cette électrode peut notamment être utilisée pour un accumulateur au lithium.

Par nanoparticules, on entend des particules dont les dimensions sont inférieures au micron.

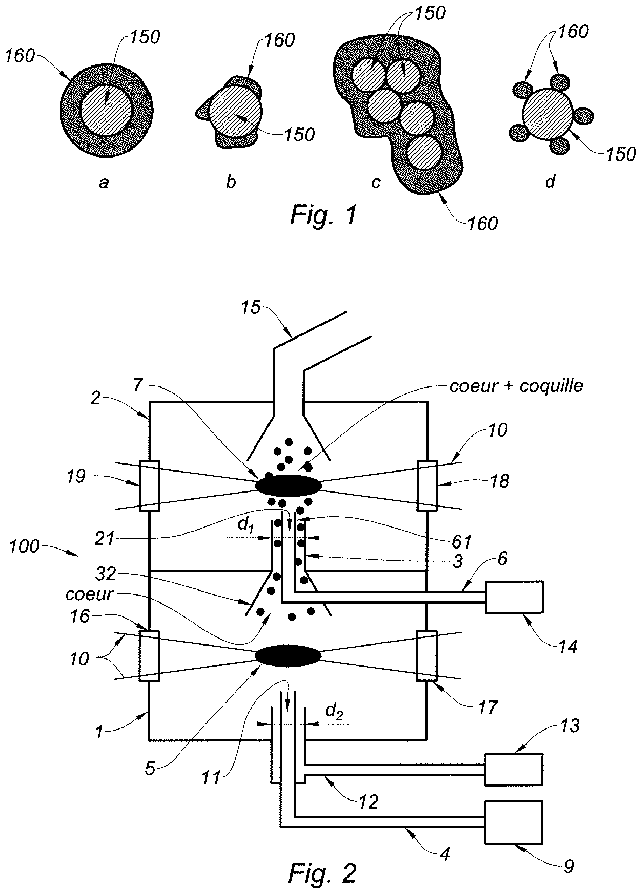

Les nanoparticules de type coeur-coquille sont formées d'un coeur enrobé par une coquille. Cet enrobage peut être intégral ou partiel comme le montre les différents schémas a, b, c et d de la figure 1. Sur ces schémas, le coeur est référencé 150 et la coquille 160.

Par exemple, FR 2 885 734 (D1) propose un procédé de fabrication d'un matériau nanocomposite de type Si-C (coeur-coquille).

Ce procédé comprend les étapes suivantes : a') fournir une poudre de silicium obtenue par la technique de dépôt chimique en phase vapeur assisté par plasma (PECVD) ou par laser CO₂, la taille des nanoparticules de silicium étant inférieure à 100nm ; b') mélanger la poudre de silicium à un polymère carboné ; c') effectuer la pyrolyse du mélange.

Le matériau nanocomposite de type Si-C ainsi formé est ensuite utilisé pour former une anode d'un accumulateur à lithium.

Dans ce procédé, la réalisation de l'étape b') de mélange de la poudre de silicium au polymère carboné (servant de précurseur du carbone pour la pyrolyse ultérieure) est cruciale.

En effet, il est connu de l'état de la technique que la coquille de carbone a plusieurs fonctions au sein du matériau nanocomposite en Si-C. Elle sert à s'accommoder des variations de volume du silicium lors de sa lithiation (formation d'un alliage de lithium/silicium dont le volume est plus important que celui du silicium). Elle sert également à limiter l'agrégation des nanoparticules pendant le cyclage (charge/décharge) de l'électrode. Elle assure également un réseau de percolation électronique au sein de l'électrode. Enfin, le pourcentage massique de carbone au sein du matériau nanocomposite permet de réduire l'instabilité de l'interface électrode/électrolyte.

De plus, il arrive parfois au cours de l'étape b') qu'un composé indésirable se forme, tel que du carbure de silicium (SiC).

De ce fait, lorsque ce matériau nanocomposite est utilisé en tant qu'anode pour un accumulateur au lithium, les performances de cette anode ne sont pas optimisées.

D'autres procédés de fabrication d'un matériau nanocomposite de type Si-C existent, en particulier en vue de la réalisation d'une anode pour accumulateur au lithium.

Ainsi, il a été proposé de broyer ensemble le silicium et du carbone (par exemple sous forme graphite) avant de réaliser la pyrolyse du mélange préalablement broyé. C'est par exemple le cas dans l'article de Dimov & al., « Mixed silicon-graphite composites as anode material for lithium-ion batteries : Influence of preparation conditions on the properties of the material », Journal of Power Sources, 136 (pp. 108-114), 2044 (D2).

Pour mélanger le silicium et le carbone, ce type de procédé nécessite beaucoup d'énergie. Cependant, en raison du niveau d'énergie requis, du carbure de silicium (SiC) et/ou une agglomération des nanoparticules Si-C se forment souvent, ce qui est, dans tous les cas, néfaste pour l'application visée.

Les procédés proposés dans les articles D1 et D2 présentent donc des limites qui ont des conséquences sur les propriétés électrochimiques de l'électrode finalement fabriquée.

Les documents US2005/0031780 et US2003/0157867 proposent également des procédés de fabrication de matériaux composites Si-C coeur-coquille.

Un objectif de l'invention est ainsi de proposer un procédé de fabrication d'une électrode comportant un matériau nanocomposite de type coeur-coquille en tant que matériau actif, matériau nanocomposite dont le coeur est en silicium et la coquille en carbone permettant d'améliorer les performances des électrodes connues.

En particulier, l'amélioration des performances passe par une amélioration de l'efficacité coulombique de l'électrode et/ou par une meilleure stabilité de cette électrode.

Pour atteindre cet objectif, l'invention propose un procédé de fabrication d'une électrode comportant un matériau nanocomposite de type coeur-coquille dont le coeur est en silicium et la coquille en carbone, caractérisé en ce qu'il comprend les étapes suivantes :
A) synthétiser le matériau nanocomposite conformément aux sous-étapes suivantes :
   a) injecter un précurseur du coeur en silicium dans une première chambre d'un réacteur;
   b) réaliser une pyrolyse du précurseur du coeur en silicium afin de former le coeur des nanoparticules ;
   c) transporter le coeur des nanoparticules ainsi formé à l'étape (b) dans une deuxième chambre du réacteur communiquant avec la première chambre ;
   d) injecter un précurseur de la coquille en carbone dans la deuxième chambre du réacteur ;
   e) réaliser une pyrolyse du précurseur de la coquille afin de former la coquille des nanoparticules et d'assurer le dépôt homogène de cette coquille autour du coeur ;
   f) collecter les nanoparticules ainsi formées pour obtenir le matériau nanocomposite ;
   dans lequel les quantités de précurseur du silicium et du carbone sont injectées dans une proportion telle que le pourcentage massique du carbone dans le matériau nanocomposite est supérieur ou égal à 45% ;
B) disperser le matériau nanocomposite synthétisé à l'étape A) dans un solvant pour former une encre ;
C) enduire cette encre sur un support destiné à former un collecteur d'électricité ;
D) éliminer le solvant de l'encre enduite sur le support à l'étape C) pour obtenir l'électrode;
E) presser ou calandrer l'électrode.

Le procédé selon l'invention pourra également comprendre les caractéristiques suivantes, prises seules ou en combinaison:
- l'étape a) s'effectue à l'aide d'un gaz neutre tel que l'argon ;
- l'étape b) et/ou l'étape e) s'effectue(nt) par pyrolyse laser ;
- les quantités de précurseur du silicium et du carbone sont injectées dans une proportion telle que le pourcentage massique du carbone dans le matériau nanocomposite est compris entre 45% et 90%, de préférence entre 60% et 80% ;
- l'étape B) consiste à disperser dans le solvant, en plus du matériau nanocomposite, un agent conducteur de l'électricité pour former l'encre.
- l'agent conducteur est du type carbone divisé, par exemple du noir de carbone, des fibres du carbone ou des nanotubes de carbone ou un mélange de ceux-ci ;
- l'étape B) consiste à disperser dans le solvant, en plus du matériau nanocomposite et, le cas échéant, en plus de l'agent conducteur, un liant polymérique.
- l'étape D) comprend une étape de séchage ;
- le procédé comprend, après l'étape E), une étape F) de séchage pour éliminer toute trace de solvant sur l'électrode.

D'autres caractéristiques, buts et avantages de l'invention seront énoncés dans la description détaillée ci-après faite en référence aux figures suivantes :
- la figure 2 est un schéma représentant un réacteur du dispositif selon l'invention ;
- la figure 3 représente un dispositif selon l'invention comportant un dispositif optique utilisé avec le réacteur représenté sur la figure 1 ;
- la figure 4 représente un matériau nanocomposite de type Si-C obtenu par le procédé selon l'invention ;
- la figure 5 représente, selon une vue éclatée, un montage expérimental d'un accumulateur au lithium comportant une anode obtenue par un procédé selon l'invention ;
- la figure 6 représente, pour différentes électrodes comportant un matériau nanocomposite obtenu selon un procédé conforme à l'invention, l'évolution de l'efficacité coulombique en fonction du numéro de cycle, ces évolutions étant déterminées à partir du montage expérimental de la figure 5 ;
- la figure 7 représente l'évolution des capacités de charge/décharge d'une électrode pour accumulateur lithium-ion selon l'art antérieur en fonction d'un numéro de cycle de charge/décharge et ce, pour différentes valeurs limites de la capacité de décharge.

L'invention vise notamment à synthétiser, par pyrolyse, un matériau nanocomposite de type coeur-coquille dont le coeur est en silicium et la coquille en carbone.

A cet effet, on met en oeuvre les étapes suivantes :
a) injecter un précurseur du coeur dans une première chambre d'un réacteur;
b) réaliser une pyrolyse du précurseur du coeur afin de former le coeur des nanoparticules ;
c) transporter le coeur des nanoparticules ainsi formé à l'étape (b) dans une deuxième chambre du réacteur communiquant avec la première chambre ;
d) injecter un précurseur de la coquille dans la deuxième chambre du réacteur ;
e) réaliser une pyrolyse du précurseur de la coquille afin de former la coquille des nanoparticules et d'assurer le dépôt de cette coquille autour du coeur ;
f) collecter les nanoparticules ainsi formées pour récupérer ledit matériau nanocomposite.

Un réacteur susceptible d'être employé est schématisé sur le la figure 2.

Ce réacteur 100 comprend une première chambre 1, une deuxième chambre 2 et un canal de communication 3 entre les deux chambres 1, 2. Dans le cas d'espèce, le réacteur 100 est disposé verticalement, si bien que la deuxième chambre 2 se situe au-dessus de la première chambre 1.

La première chambre 1 est munie d'une entrée 11 pour un précurseur du coeur, en l'occurrence un précurseur du silicium. La deuxième chambre 2 est également munie d'une entrée 21 pour un précurseur de la coquille, en l'occurrence un précurseur du carbone. De ce fait, la première chambre 1 est dédiée à la synthèse du coeur et la deuxième chambre 2 à la synthèse de la coquille et à la formation définitive des nanoparticules de type coeur-coquille.

Une fois les nanoparticules coeur-coquille formées, elles sont extraites du réacteur 100 par le biais d'un canal 15 de récupération de ces nanoparticules, comportant un ou plusieurs collecteurs avec des barrières filtrantes. Ce ou ces collecteur(s) permettent de récupérer le matériau nanocomposite.

La synthèse du coeur et de la coquille s'effectue donc successivement dans le temps et dans l'espace. Pour autant, la production des nanoparticules s'effectue en continu en alimentant chaque entrée 11, 21 en flux continu par un précurseur dédié, selon le cas, à la synthèse du coeur ou à la synthèse de la coquille.

Cette synthèse procure de nombreux avantages par rapport aux techniques existantes, par exemple présentées dans les documents D1 ou D2.

La synthèse du matériau nanocomposite en continu est particulièrement intéressante car elle simplifie grandement l'obtention de ce matériau.

De plus, cette synthèse limite la formation d'oxydes ou de composés chimiques autres que les nanoparticules Si-C du fait du temps d'exposition réduit du coeur en silicium avec son environnement dans la première chambre et lors de son passage entre les deux chambres du réacteur (production en continu).

En outre, cette synthèse limite la formation éventuelle de carbure de silicium (SiC) dans la deuxième chambre 2 du réacteur, notamment du fait de la formation successive du coeur en silicium, puis de la coquille en carbone.

Les entrées 11, 21 se présenteront généralement sous la forme de buses d'injection.

L'entrée 11 de la première chambre 1 est reliée à un canal d'amenée 4 du précurseur du coeur, ce canal 4 étant relié à une source 9 pour le précurseur du coeur.

Un gaz neutre est avantageusement amené dans la première chambre 1 par un conduit 12 dont une partie entoure le canal 4, ledit conduit 12 étant par ailleurs relié à une source 13 de ce gaz.

Ce gaz neutre sert principalement au confinement de la zone d'interaction. Ceci permet d'éviter tout contact entre le précurseur et les parois de la chambre, limitant ainsi les risques de réaction chimique avec les précurseurs du silicium et/ou du carbone. Ce gaz neutre évite également toute oxydation du silicium.

Grâce à ce confinement, on limite encore plus, voire on évite, toute pollution du coeur en silicium. Le coeur en silicium garde ainsi son intégrité chimique, sans formation d'oxydes ou d'autres composés chimiques qui peuvent être générés par les techniques proposées dans les documents D1 et D2.

Ce gaz neutre peut éventuellement également aider au transport du coeur des nanoparticules.

Pour cette raison, l'étape a) s'effectuera avantageusement à l'aide d'un gaz neutre tel que l'argon.

Parallèlement à la transmission du coeur des nanoparticules vers la deuxième chambre 2, un précurseur de la coquille est amené dans la deuxième chambre 2. A cet effet, l'entrée 21 de la deuxième chambre 20 forme une extrémité d'un canal d'amenée 6 de ce précurseur, relié à une source 14 pour ce précurseur. Dans le cas d'espèce, une partie 61 de ce canal d'amenée est logée à l'intérieur du canal de communication 3 entre les deux chambres 1, 2.

Le coeur des nanoparticules et le précurseur de la coquille se mélangent donc dans la deuxième chambre 2.

L'alimentation en précurseur de chaque chambre 1, 2 est faite de manière indépendante. En pratique, cela permet de contrôler la quantité de précurseurs introduite dans chaque chambre 1, 2 et donc le pourcentage massique de carbone/silicium dans le matériau nanocomposite finalement obtenu. De plus, le contrôle des débits dans chaque canal d'amenée des précurseurs permet de contrôler l'homogénéité du mélange dans la deuxième chambre 2. Comme cela sera expliqué dans la suite de la description, ceci a des conséquences sur les propriétés électrochimiques d'une électrode susceptible d'être fabriqué avec ce matériau nanocomposite.

Un précurseur susceptible d'être utilisé pour le silicium est le silane, lequel se présente sous forme gazeuse. Un précurseur susceptible d'être utilisé pour le carbone est l'éthylène.

La pyrolyse des précurseurs est avantageusement, mais non exclusivement, réalisée par pyrolyse laser.

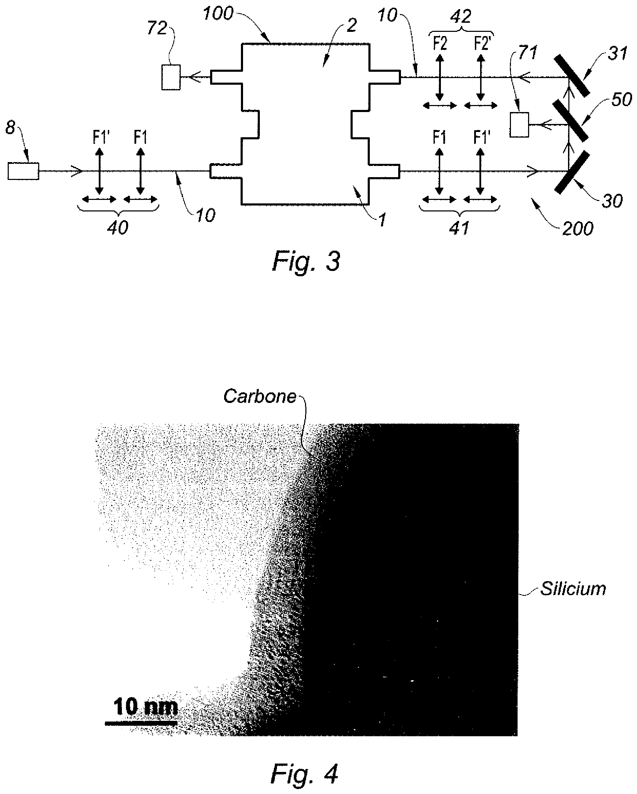

La figure 3 représente un dispositif optique 200 permettant de mettre en oeuvre cette pyrolyse laser sur le réacteur 100 schématisé sur la figure 2.

Le dispositif optique 200 comprend un laser 8 et un jeu de deux miroirs 30, 31. Le laser 8 est disposé sur le côté de la première chambre 1 pour éclairer celle-ci en premier. Le faisceau laser 10 présente un axe de propagation sécant à la verticale et, dans le cas d'espèce, horizontal. La première chambre 1 comprend donc des parois latérales transparentes 16, 17 au faisceau laser 10 pour permettre au faisceau laser de la traverser de part en part, selon un axe sensiblement horizontal.

On pourrait prévoir un autre agencement respectif du laser 8 par rapport au réacteur 100. Cependant, cet agencement est particulièrement pratique pour faire en sorte que le faisceau laser soit apte à interagir avec lesdits précurseurs afin de former le coeur et la coquille.

Le jeu de miroirs 30, 31 permet de rediriger le faisceau laser 10 issu de la première chambre 1 en direction de la deuxième chambre 2, afin que le faisceau laser traverse la deuxième chambre selon un axe de propagation sécant à la verticale et, dans le cas d'espèce, horizontal. La deuxième chambre 2 comprend donc des parois latérales transparentes 18, 19 au faisceau laser 10.

Avantageusement, les miroirs 30, 31 sont plans et associés à un ou plusieurs moyens de focalisation 40, 41, 42. Ainsi, et comme représenté sur la figure 3, il est possible de mettre en oeuvre un premier moyen de focalisation 40 entre le laser 8 et la première chambre 1, un deuxième moyen de focalisation 41 entre la première chambre 1 et le miroir 30 (afin de re-collimater le faisceau laser 10 issu de la première chambre 1 avant le passage par les miroirs 30, 31) et enfin, un troisième moyen de focalisation 42 entre le miroir 31 et la deuxième chambre 2.

Une lame séparatrice 50 peut être prévue, notamment entre les deux miroirs, pour régler la puissance du faisceau laser dans la deuxième chambre 2.

Des moyens d'arrêt 71, 72 du faisceau laser sont prévus, en particulier en sortie de la deuxième chambre 2.

### Exemple de réalisation :

Le dispositif optique 200 employé est celui de la figure 3, sans lame séparatrice. Des moyens de focalisation 40, 41 ont été utilisés entre le laser 8 et la première chambre 1 et en sortie de la première chambre 1. Plus précisément, une lentille cylindrique 40 de focale 500mm a été placée entre le laser 8 et la première chambre 1 et une lentille similaire 41 a été placée en sortie de la première chambre 1, à 1000mm de la lentille 41. La lentille 41 sert à collimater à nouveau le faisceau laser 10 avant le passage par les miroirs 30, 31. Aucune focalisation n'a été effectuée pour le faisceau laser entrant dans la deuxième chambre 2.

Le réacteur 100 est celui qui est représenté sur la figure 2. Le silane est utilisé comme précurseur du coeur (silicium). De l'éthylène est utilisé comme précurseur de la coquille (carbone).

Les paramètres suivants sont utilisés :
- débit silane (chambre 1) = 46sccm ;
- débit éthylène (chambre 2) = 406sccm :
- puissance du laser = 560W
- pression dans le réacteur = atmosphérique ;
- diamètre entrée 11 = 2mm ;
- diamètre entrée 21 = 10mm ;
- diamètre (d₁) canal de communication 3 du côté de la deuxième chambre = 24mm
- diamètre (d₂) de la cheminée entourant le canal 4 = 20mm.

Par ce biais, un matériau nanocomposite fait de nanoparticules de silicium de 100nm environ enrobées par une coquille en carbone répartie de façon homogène autour du coeur en silicium, dont l'épaisseur est d'environ 5nm à 10nm a ainsi pu être obtenu. Cela correspond à un matériau nanocomposite comportant un pourcentage massique de carbone de 71%. Comme cela sera expliqué par la suite, ce matériau nanocomposite peut être utilisé pour former l'électrode E3.

La figure 3 est une image de ce matériau nanocomposite, sur laquelle on peut distinguer le silicium et son enrobage homogène en carbone. Il est assimilable aux structures représentées sur le schéma a) de la figure 1.

Ceci n'est qu'un exemple, car il est possible, avec le procédé décrit précédemment d'obtenir des nanoparticules Si-C avec un enrobage homogène en carbone dont les dimensions totales sont comprises entre 5nm et 1000nm. Ainsi, on peut obtenir des nanoparticules Si-C dites « individuelles » (comme représenté sur schéma a) de la figure 1) pour lesquelles l'épaisseur de la coquille en carbone est inférieure à 20nm et généralement de l'ordre de 3nm à 5nm. On peut également obtenir des nanoparticules Si-C pour lesquelles les coeurs en silicium sont dispersés dans un agglomérat de carbone (comme représenté sur le schéma c) de la figure 1), dont l'épaisseur de la coquille peut atteindre 200nm.

Par ailleurs, le coeur en silicium peut être monocristallin, polycristallin ou amorphe. La coquille en carbone peut être plus ou moins organisée, c'est-à-dire plus ou moins graphitique. Ceci peut être géré lors de la pyrolyse. De plus, il est envisageable, avec le dispositif 100 décrit précédemment, de réaliser un dopage du silicium pour améliorer la conductivité électrique. Ainsi, ce dopage peut être un dopage de type P en utilisant un précurseur du Bore tel que le diborane. Ce dopage peut, au contraire, être un dopage de type N en utilisant un précurseur du phosphore telle que la phosphine.

Ce matériau nanocomposite peut alors être utilisé en tant qu'anode dans un accumulateur (batterie) lithium-ion ou en tant que cathode dans un accumulateur au lithium (sous forme métallique).

Dans ce but, l'invention propose un procédé de fabrication d'une électrode comportant un matériau nanocomposite de type coeur-coquille dont le coeur est en silicium et la coquille en carbone.

Ce procédé de fabrication comprend les étapes suivantes :
A) synthétiser un matériau nanocomposite de type coeur-coquille conformément au procédé de synthèse décrit précédemment (étapes a) à f));
B) disperser le matériau nanocomposite synthétisé à l'étape A) dans un solvant pour former une encre ;
C) enduire cette encre sur un support ;
D) éliminer le solvant de l'encre enduite sur le support à l'étape C), ledit support étant destiné à former un collecteur d'électricité ;
E) presser ou calandrer l'électrode.

L'étape B) peut consister à disperser dans le solvant, en plus du matériau nanocomposite, un agent conducteur de l'électricité pour former l'encre.

Cet agent conducteur est avantageusement du type carbone divisé, par exemple du noir de carbone, des fibres du carbone ou des nanotubes de carbone ou un mélange de ceux-ci.

L'étape B) peut aussi consister à disperser dans le solvant, en plus des nanoparticules et, le cas échéant, en plus de l'agent conducteur, un liant polymérique.

Avantageusement, la solution comportant le solvant comportera le matériau nanocomposite, un agent conducteur et un liant polymérique.

Le liant polymérique peut être soluble dans un solvant aqueux. Il peut alors contenir un mélange de polymère de carboxyméthylcellulose (CMC) et d'un copolymère de butadiène-styrène (SBR).

Le liant polymérique peut être soluble dans un solvant organique. Il peut alors contenir du polyimide.

Le solvant peut don être aqueux ou organique.

Le support introduit à l'étape C) est réalisé en un matériau conducteur de l'électricité, tel que le cuivre.

L'étape D) peut comprendre une étape de séchage.

L'étape E) de pressage ou calandrage vise à modifier la porosité de l'électrode, pour obtenir une porosité comprise entre 30% et 70%.

Cela permet d'augmenter la densité d'énergie de l'électrode, laquelle dépend notamment, mais pas seulement, de cette porosité.

Typiquement, on cherche à obtenir des densités d'énergie d'au moins 600mAh/cm³ dans le matériau actif et, de préférence, supérieure à 1000mAh/cm³.

A cet effet, on peut réaliser un pressage d'une tonne/cm² de matériau nanocomposite. Le calandrage consiste quant à lui à faire passer l'électrode entre deux rouleaux espacés d'une distance déterminée en fonction de la propriété recherchée. Généralement, la distance séparant les deux rouleaux est de quelques dizaines de microns.

Enfin, après l'étape E), une étape F) de séchage pour éliminer toute trace de solvant sur l'électrode peut être réalisée.

Dans ce cas, l'électrode comportera le support conducteur de l'électricité, également appelé collecteur et, en surface de ce support, la matière active de l'électrode (matériau nanocomposite de type Si-C) avec éventuellement l'agent conducteur et/ou le liant polymérique.

Plus précisément, l'électrode comprendra (hors support/collecteur d'électricité):
- le matériau actif dont le pourcentage massique dans l'électrode est compris entre 50% et 96%, par exemple entre 70% et 96% ;
- un agent conducteur de l'électricité dont le pourcentage massique dans l'électrode est compris entre 0 et 25%, par exemple entre 0 et 10% ;
- un liant polymérique dont le pourcentage massique dans l'électrode est compris entre 0 et 25%, par exemple entre 4% et 15% ;
le pourcentage massique cumulé du matériau actif, de l'agent conducteur de l'électricité et du liant polymérique faisant 100% dans la mesure où la masse du support/collecteur d'électricité n'est pas intégrée.

### Exemple de réalisation d'électrode pour accumulateur au lithium.

Un accumulateur 100' au lithium a été monté avec cette électrode pour identifier ses caractéristiques électrochimiques.

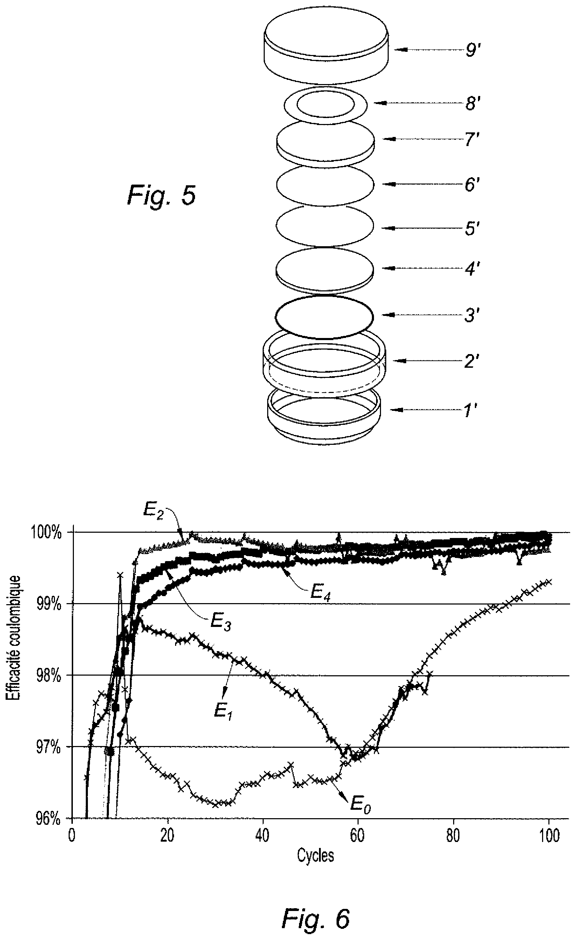

Un schéma, en vue éclatée, de cet accumulateur 100' est représenté sur la figure 5.

L'accumulateur 100' comprend un capot inférieur 1', un joint 2', une cale 3', une électrode 4', un séparateur 5', du lithium sous forme métallique 6', une autre cale 7', un ressort 8' et un capot supérieur 9'.

Les capots 1', 9' et le joint permettent de loger de manière étanche l'électrolyte, en l'occurrence un sel de LiPF₆ à une concentration de 1 mole dissous dans un mélange d'éthylène carbonate/diéthylène carbonate en proportion 1 :1.

Le séparateur 5' est à base de polyéthylène (PE) et de polypropylène (PP) et présente une épaisseur de quelques microns.

Lorsque l'accumulateur 100' comprend une électrode 4' en Si-C face à du lithium 6' sous forme métallique, le potentiel d'oxydo-réduction de la réaction de lithiation du silicium est supérieur au potentiel de dépôt du lithium sous forme métallique. Dans ce cas, l'électrode est positive (cathode).

Sur le schéma de la figure 5, on utilise du lithium sous forme métallique si bien que l'électrode est une cathode. Une charge de l'électrode 6' de l'accumulateur 100' correspond alors à une délithiation du silicium et une décharge à une lithiation du silicium.

Les conditions suivantes sont appliquées à l'accumulateur 100' :
- le cyclage (charge/décharge) est effectué en mode galvanostatique à un régime C/10 (charge ou décharge en 10 heures pour atteindre la capacité théorique du silicium, cette capacité étant déterminée en fonction de la masse de silicium présente et de la capacité théorique massique du silicium qui vaut 3580mAh/g) à température ambiante ;
- la capacité de décharge est bloquée à 1000mAh/g de silicium ou le potentiel à 10mV (un potentiel inférieur à 10mV correspond à un dépôt du lithium 6' sous forme métallique sur le silicium) ;
- la capacité de charge est mesurée en limitant le potentiel à 1,2V.

Il convient de noter que le régime de cyclage (en l'occurrence C/10) permet de déterminer le courant adapté à l'accumulateur par unité de masse de silicium (en l'occurrence 1000mAh/g).

Bien entendu, la masse totale de silicium doit être préalablement connue. La masse de silicium enduite sur le support/collecteur d'électricité pendant l'étape C) n'évolue plus dans la suite du procédé de fabrication. Elle peut donc être déterminée à l'issue de cette étape C). En pratique, il est plus aisé de déterminer cette masse de silicium à l'issue de l'étape D).

Le procédé de fabrication selon les étapes A) à E) décrites précédemment, avec une pression de 1 tonne/cm² pour l'étape E) a été mis en oeuvre pour fabriquer plusieurs électrodes comportant toutes 50% en masse du matériau nanocomposite en Si-C, 12,5% en masse de fibres de carbone (agent conducteur), 12,5% en masse de noir de carbone (agent conducteur), 25% en masse de carboxymethylcellulose (liant polymérique).

Toutefois, ces différentes électrodes se distinguent les unes des autres par le pourcentage massique de carbone au sein du matériau nanocomposite Si-C (le pourcentage massique du matériau nanocomposite dans l'électrode restant à 50%).

De manière générale, l'effet du pourcentage massique de carbone dans le matériau actif, par exemple, sur la stabilité de l'interface électrode/électrolyte est connu.

Toutefois, l'influence de la coquille en carbone est a priori modifiée par le procédé de fabrication selon les étapes A) à E) et en particulier par l'étape A) car celle-ci permet, par rapport aux techniques existantes, de définir un matériau nanocomposite en Si-C (matériau actif pour l'électrode) dans lequel la coquille en carbone se répartit plus uniformément autour du coeur.

Les propriétés électrochimiques du matériau nanocomposite, en tant que matériau actif d'électrode sont donc a priori modifiées. Ceci est d'autant plus vrai lorsqu'un flux de gaz neutre est mis en oeuvre pendant l'étape A), pour empêcher toute oxydation du silicium.

Pour cette raison, les inventeurs ont testés les électrodes suivantes.

Une électrode E1, comportait 35% en masse de carbone dans le matériau nanocomposite.

Une électrode E2 comportait 62% en masse de carbone dans le matériau nanocomposite.

Une électrode E3 comportait 71% en masse de carbone dans le matériau nanocomposite.

Enfin, une électrode E4 comportait 75% en masse de carbone dans le matériau nanocomposite.

Par ailleurs, en vue de servir de référence une électrode E0 ne comportait que du silicium dans le matériau dit « nanocomposite » (pourcentage massique de carbone = 0%). Le silicium peut être fabriqué avec le dispositif de la figure 2, sans injection de précurseur dans la deuxième chambre ou avec un dispositif connu de pyrolyse laser ne comportant qu'une seule chambre.

Pour faire varier le taux de carbone dans le matériau nanocomposite, on ajuste la quantité de précurseurs du coeur et de la coquille dans le dispositif 100. Par exemple, pour l'électrode E3, et comme présenté précédemment, on utilise 46sccm de silane et 106sccm d'éthylène.

Chaque électrode E2 à E5 ainsi réalisée présente une densité d'énergie d'au moins 600 mAh/cm³ et, de préférence, supérieure à 1000 mAh/cm³.

La figure 6 représente, pour chaque accumulateur testé avec les différentes électrodes E0 à E4, l'évolution de l'efficacité coulombique (en ordonnées) en fonction du numéro de cycle (en abscisses).

Un cycle est défini par une charge et une décharge de l'électrode concernée.

L'efficacité coulombique est définie ici par le rapport entre la capacité délithiée du silicium sur la capacité lithiée du silicium, à savoir la proportion de lithium lithiée réversiblement au sein du silicium. Cette efficacité coulombique peut être déterminée à chaque cycle.

Il convient de noter que l'efficacité coulombique dans les premiers cycles est faible, ce qui peut être compensé par une source de lithium supplémentaire.

Comme on peut le constater sur la figure 6, après quelques cycles, une efficacité coulombique supérieure à 99%, voire à 99,5% est obtenue avec les électrodes E2 (62% en masse de carbone dans le matériau nanocomposite), E3 (71% en masse de carbone dans le matériau nanocomposite) et E4 (75% en masse de carbone dans le matériau nanocomposite).

De surcroît, l'évolution de l'efficacité coulombique est stable, à partir du 20^{ème} cycle, pour ces mêmes électrodes E2, E3 et E4. Ceci traduit une bonne stabilité de l'interface électrode/électrolyte.

Au contraire, les électrodes E0 (pas de carbone dans le matériau dit « nanocomposite ») et E1 (35% en masse dans le matériau nanocomposite) présentent des efficacités coulombique instables. Ceci traduit une grande instabilité de l'interface entre cette électrode et l'électrolyte.

Ces efficacités coulombique sont, de surcroît, plus faibles que celles obtenues avec les électrodes E2 à E4.

Ces différents tests montrent donc que pour obtenir une électrode qui, en pratique, est susceptible de fonctionner correctement, il est préférable de prévoir un pourcentage massique de carbone supérieur ou égal à 45% au sein du matériau nanocomposite en Si-C (matériau actif). L'étape A) est donc réalisée en conséquence, en choisissant les proportions respectives des précurseurs du coeur et de la coquille.

Avantageusement, le pourcentage massique de carbone au sein du matériau en Si-C sera donc compris entre 45% et 90%, de préférence entre 50% et 90%, entre 50% et 85% ou encore plus préférentiellement entre 55% et 85%, voire entre 60% et 80%.

Les résultats qui ont été présentés sont transposables à une anode pour un accumulateur de type lithium-ion. Toutefois, une charge de l'anode correspondrait alors à une lithiation du silicium et une décharge à une délithiation du silicium.

Afin de mieux identifier l'effet de l'obtention d'un enrobage homogène du carbone autour du silicium, une comparaison par rapport au document D2 peut être effectuée.

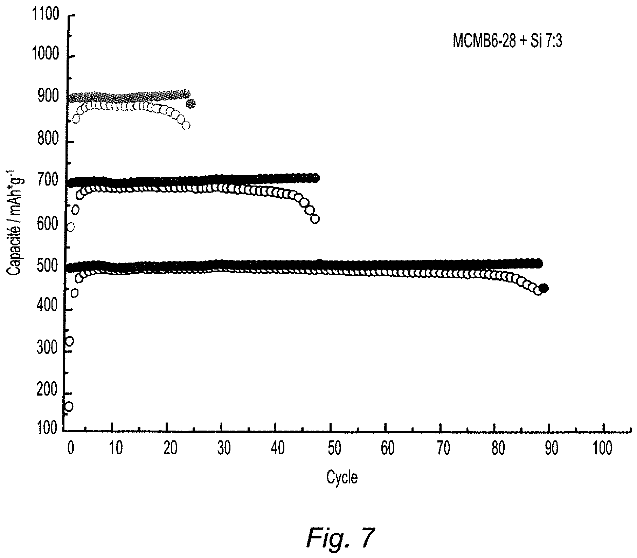

Nous avons reproduit sur la figure 7 annexée, la figure 4 du document D2. Du fait que le document concerne une anode pour accumulateur de type ion-lithium, la figure 7 représente l'évolution de la capacité lithiée du silicium (charge de l'anode = capacité d'extraction de Li+) et de la capacité délithiée du silicium (décharge de l'anode = capacité d'insertion de Li+) en fonction du numéro de cycle et ce, pour des capacités de décharge limitées, respectivement, à 500mAh/g, 700mAh/g et 900mAh/g.

L'efficacité coulombique est définie ici par le rapport entre la capacité lithiée du silicium sur la capacité délithiée du silicium, ce qui correspond toujours à la proportion de lithium lithiée réversiblement au sein du silicium.

Pour les électrodes E1 à E4 testées dans le cadre de l'invention, on rappelle que la capacité de décharge a été bloquée à 1000mAh/g de silicium, ce qui est proche du test effectuée à 900mAh/g dans le document D2.

Par ailleurs, l'électrode E3 testée dans le cadre de l'invention présente un pourcentage massique de carbone de 71 %, soit 29% pour le silicium. Ceci est très proche du matériau composite MCMB 6-28 + Si 7 :3 (soit un pourcentage massique de silicium de 30% dans le matériau composite) sur lequel les tests de la figure 7 ont été réalisés (le matériau MCMB 6-28 est un matériau graphitique synthétique proposé par la société Osaka Gas, Japon ; cf. document D2)
Une comparaison peut donc être faite entre les résultats de la figure 7 (avec une capacité de décharge de 900mAh/g) et ceux de la figure 6 pour l'électrode E3.

En effectuant cette comparaison, on note que l'électrode E3 présente une stabilité bien plus élevée. En effet, la stabilité est assurée au-delà de 100 cycles alors que sur la figure 7, l'électrode devient instable à partir du 15^{ème} cycle. De plus, les résultats de la figure 7 laissent penser que l'efficacité coulombique ne dépasse pas 98%.

En définitive, l'invention met en évidence que la combinaison d'un pourcentage massique de carbone supérieur ou égal à 45% dans le matériau nanocomposite avec une répartition homogène du carbone autour du silicium permet d'obtenir une électrode dont la stabilité et l'efficacité coulombique sont excellentes.

Ainsi, grâce à l'invention on peut définir une électrode comportant un collecteur d'électricité et un matériau nanocomposite de type coeur-coquille dont le coeur est en silicium et la coquille en carbone, caractérisé en ce que le matériau nanocomposite forme un matériau actif de l'électrode comportant un pourcentage de carbone d'au moins 45% dans ce matériau actif et dans lequel le carbone est réparti de façon homogène autour du silicium.

Avantageusement, le pourcentage de carbone dans le matériau actif est compris entre 45% et 90%, de préférence entre 60% et 80%.

## Revendications

1. Procédé de fabrication d'une électrode comportant un matériau nanocomposite de type coeur-coquille dont le coeur est en silicium et la coquille en carbone, **caractérisé en ce qu'**il comprend les étapes suivantes :
A) synthétiser le matériau nanocomposite conformément aux sous-étapes suivantes :
a) injecter un précurseur du coeur en silicium dans une première chambre d'un réacteur;
b) réaliser une pyrolyse du précurseur du coeur en silicium afin de former le coeur des nanoparticules ;
c) transporter le coeur des nanoparticules ainsi formé à l'étape (b) dans une deuxième chambre du réacteur communiquant avec la première chambre ;
d) injecter un précurseur de la coquille en carbone dans la deuxième chambre du réacteur ;
e) réaliser une pyrolyse du précurseur de la coquille afin de former la coquille des nanoparticules et d'assurer le dépôt homogène de cette coquille autour du coeur ;
f) collecter les nanoparticules ainsi formées pour obtenir le matériau nanocomposite ;
dans lequel les quantités de précurseur du silicium et du carbone sont injectées dans une proportion telle que le pourcentage massique du carbone dans le matériau nanocomposite est supérieur ou égal à 45% ;
B) disperser le matériau nanocomposite synthétisé à l'étape A) dans un solvant pour former une encre ;
C) enduire cette encre sur un support destiné à former un collecteur d'électricité ;
D) éliminer le solvant de l'encre enduite sur le support à l'étape C) pour obtenir l'électrode;
E) presser ou calandrer l'électrode.

2. Procédé selon la revendication 1, **caractérisé en ce que** l'étape a) s'effectue à l'aide d'un gaz neutre tel que l'argon.

3. Procédé selon l'une des revendications précédentes, **caractérisé en ce que** l'étape b) et/ou l'étape e) s'effectue(nt) par pyrolyse laser.

4. Procédé selon l'une des revendications précédentes, **caractérisé en ce que** les quantités de précurseur du silicium et du carbone sont injectées dans une proportion telle que le pourcentage massique du carbone dans le matériau nanocomposite est compris entre 45% et 90%, de préférence entre 60% et 80%.

5. Procédé selon l'une des revendications précédentes, **caractérisé en ce que** l'étape B) consiste à disperser dans le solvant, en plus du matériau nanocomposite, un agent conducteur de l'électricité pour former l'encre.

6. Procédé selon la revendication précédente, **caractérisé en ce que** l'agent conducteur est du type carbone divisé, par exemple du noir de carbone, des fibres du carbone ou des nanotubes de carbone ou un mélange de ceux-ci.

7. Procédé selon l'une des revendications précédentes, **caractérisé en ce que** l'étape B) consiste à disperser dans le solvant, en plus du matériau nanocomposite et, le cas échéant, en plus de l'agent conducteur, un liant polymérique.

8. Procédé selon l'une des revendications précédentes, **caractérisé en ce que** l'étape D) comprend une étape de séchage.

9. Procédé selon l'une des revendications précédentes, **caractérisé en ce qu'**il comprend, après l'étape E), une étape F) de séchage pour éliminer toute trace de solvant sur l'électrode.

## Patentansprüche

1. Verfahren zur Herstellung einer Elektrode, die ein Nanoverbundmaterial vom Kern-Schale-Typ aufweist, dessen Kern aus Silicium und dessen Schale aus Kohlenstoff ist, **dadurch gekennzeichnet, dass** es die folgenden Schritte umfasst:
A) Synthetisieren des Nanoverbundmaterials gemäß den folgenden Teilschritten:
a) Einspritzen einer Siliciumkern-Vorstufe in eine erste Kammer eines Reaktors;
b) Durchführen einer Pyrolyse der Siliciumkern-Vorstufe, um den Nanopartikelkern zu bilden;
c) Transportieren des somit in Schritt (b) gebildeten Nanopartikelkerns in eine zweite Kammer des Reaktors, die mit der ersten Kammer in Verbindung steht;
d) Einspritzen einer Kohlenstoffschalen-Vorstufe in die zweite Kammer des Reaktors;
e) Durchführen einer Pyrolyse der Schalenvorstufe, um die Nanopartikelschale zu bilden und die homogene Abscheidung dieser Schale rund um den Kern zu gewährleisten;
f) Sammeln der somit gebildeten Nanopartikeln, um das Nanoverbundmaterial zu erhalten;
wobei die Mengen der Silicium- und der Kohlenstoffvorstufe in einem solchen Verhältnis eingespritzt werden, dass der Gewichtsprozentwert des Kohlenstoffs im Nanoverbundmaterial mehr als oder gleich 45 % beträgt;
B) Dispergieren des in Schritt A) synthetisierten Nanoverbundmaterials in einem Lösungsmittel, um eine Tinte zu bilden;
C) Auftragen dieser Tinte auf einen Träger, der zum Bilden eines Elektrizitätssammlers vorgesehen ist;
D) Entfernen des Lösungsmittels der in Schritt C) auf den Träger aufgetragenen Tinte, um die Elektrode zu erhalten;
E) Pressen oder Kalandrieren der Elektrode.

2. Verfahren nach Anspruch 1, **dadurch gekennzeichnet, dass** Schritt a) mittels eines Inertgases wie Argon erfolgt.

3. Verfahren nach einem der vorstehenden Ansprüche, **dadurch gekennzeichnet, dass** Schritt b) und/oder Schritt e) durch Laserpyrolyse erfolgt/en.

4. Verfahren nach einem der vorstehenden Ansprüche, **dadurch gekennzeichnet, dass** die Mengen der Silicium- und der Kohlenstoffvorstufe in einem solchen Verhältnis eingespritzt werden, dass der Gewichtsprozentwert des Kohlenstoffs im Nanoverbundmaterial zwischen 45 % und 90 %, vorzugsweise zwischen 60 % und 80 % liegt.

5. Verfahren nach einem der vorstehenden Ansprüche, **dadurch gekennzeichnet, dass** Schritt B) darin besteht, zusätzlich zum Nanoverbundmaterial ein elektrisch leitendes Mittel im Lösungsmittel zu dispergieren, um die Tinte zu bilden.

6. Verfahren nach dem vorstehenden Anspruch, **dadurch gekennzeichnet, dass** das leitende Mittel vom Typ von verteiltem Kohlenstoff, beispielsweise Kienruß, Kohlenstofffasern oder Kohlenstoffnanoröhren oder ein Gemisch davon ist.

7. Verfahren nach einem der vorstehenden Ansprüche, **dadurch gekennzeichnet, dass** Schritt B) darin besteht, zusätzlich zum Nanoverbundmaterial und gegebenenfalls zusätzlich zum leitenden Mittel ein polymeres Bindemittel im Lösungsmittel zu dispergieren.

8. Verfahren nach einem der vorstehenden Ansprüche, **dadurch gekennzeichnet, dass** Schritt D) einen Trocknungsschritt umfasst.

9. Verfahren nach einem der vorstehenden Ansprüche, **dadurch gekennzeichnet, dass** es nach Schritt E) einen Trocknungsschritt F) umfasst, um jegliche Spur von Lösungsmittel auf der Elektrode zu entfernen.

## Claims

1. Method for producing an electrode having a core-shell type nanocomposite material of which the core is made of silicon and the shell made of carbon, **characterised in that** it comprises the following steps:
A) synthesising the nanocomposite material according to the following sub-steps:
a) injecting a silicon core precursor into a first chamber of a reactor;
b) pyrolysing the silicon core precursor in order to form the core of the nanoparticles;
c) transporting the core of the nanoparticles formed in this way in step (b) into a second chamber of the reactor communicating with the first chamber;
d) injecting a carbon shell precursor into the second chamber of the reactor;
e) pyrolysing the shell precursor in order to form the shell of the nanoparticles and ensure the homogeneous deposit of this shell around the core;
f) collecting the nanoparticles formed in this way to obtain the nanocomposite material;
wherein the quantities of silicon and carbon precursor are injected in a proportion such that the mass percentage of carbon in the nanocomposite material is greater than or equal to 45%;
B) dispersing the nanocomposite material synthesised in step A) in a solvent to form an ink;
C) applying this ink to a support intended to form an electricity collector;
D) eliminating the solvent from the ink applied to the support in step C) to obtain the electrode;
E) pressing or calendaring the electrode.

2. Method according to claim 1, **characterised in that** step a) is carried out using a neutral gas such as argon.

3. Method according to one of the preceding claims, **characterised in that** step b) and/or step e) is/are carried out by laser pyrolysis.

4. Method according to one of the preceding claims, **characterised in that** the quantities of silicon and carbon precursor are injected in a proportion such that the mass percentage of carbon in the nanocomposite material is between 45% and 90%, preferably between 60% and 80%.

5. Method according to one of the preceding claims, **characterised in that** step B) consists of dispersing in the solvent, in addition to the nanocomposite material, an electricity-conducting agent in order to form the ink.

6. Method according to the preceding claim, **characterised in that** the conducting agent is of the split carbon type, for example carbon black, carbon fibres or carbon nanotubes or a mixture thereof.

7. Method according to one of the preceding claims, **characterised in that** step B) consists of dispersing in the solvent, in addition to the nanocomposite material and, where necessary, in addition to the conducting agent, a polymeric binding agent.

8. Method according to one of the preceding claims, **characterised in that** step D) comprises a drying step.

9. Method according to one of the preceding claims, **characterised in that** it comprises, after step E), a drying step F) to eliminate any trace of solvent on the electrode.
